# EUROPÄISCHE PATENTSCHRIFT

(11) **EP 2 199 145 B1**
(45) Veröffentlichungstag und Bekanntmachung des Hinweises auf die Patenterteilung: **25.04.2012**
(21) Anmeldenummer: 09013837.1
(22) Anmeldetag: 04.11.2009
(51) Int. Cl.: B60N 2/48, B60N 2/427, B60N 2/00

(54) **Verstelleinrichtung für eine Kopfstütze eines Kraftfahrzeugsitzes**
Adjustment device for a head rest of a motor vehicle seat
Dispositif de réglage pour un repose-tête de véhicule automobile

(30) Priorität: 20.12.2008 DE 102008064348
(43) Veröffentlichungstag der Anmeldung: 23.06.2010
(73) Patentinhaber: Brose Fahrzeugteile GmbH & Co. Kommanditgesellschaft, Hallstadt, 96103 Hallstadt (DE)
(72) Erfinder: Würstlein, Holger, 97475 Zeil am Main (DE); Hofmann, Tobias, 97633 Leinach (DE); Khemiri, Faouzi, 96052 Bamberg (DE)
(74) Vertreter: FDST Patentanwälte

(56) Entgegenhaltungen:
- WO-A1-2008/133291
- DE-A1- 10 227 765
- DE-A1- 19 503 203
- DE-C1- 19 916 804
- FR-A1- 2 884 775
- US-A1- 2006 175 881

## Beschreibung

Die Erfindung bezieht sich auf eine Verstelleinrichtung für eine Kopfstütze eines Kraftfahrzeugsitzes.

Eine Kopfstütze dient bei einem Kraftfahrzeugsitz dazu, den Kopf eines den Sitz benutzenden Fahrzeuginsassen im Crash-Fall abzustützen und damit ein Abknicken der Halswirbelsäule nach hinten zu vermeiden. Der durch die Kopfstütze erzielte Sicherheitsgewinn wird in vollem Umfang aber nur dann erreicht, wenn die Kopfstütze bezüglich der vertikalen Kopfposition auf richtiger Höhe eingestellt ist, so dass der Kopf im Crash-Fall im Wesentlichen auf ein hierfür vorgesehenes Zentrum der Kopfstütze aufschlägt. Eine falsch eingestellte Kopfstütze kann dagegen im Crash-Fall zu Verletzungen im Nacken- und Kopfbereich führen. Um das Risiko einer Kopfverletzung, beispielsweise einer Gehirnerschütterung, beim Aufprall des Kopfes auf der Kopfstütze zu minimieren, sollte die Kopfstütze auch in horizontaler Richtung möglichst nah an dem Kopf des Fahrzeuginsassen angeordnet sein, dennoch aber eine ungehinderte Kopfbewegung ermöglichen.

Zur korrekten Positionierung einer Kopfstütze ist diese üblicherweise in vertikaler Richtung, sowie teilweise auch in horizontaler Richtung bezüglich der Sitzlehne verstellbar. Bei einem hochwertigen Kraftfahrzeugsitz erfolgt die Verstellung der Kopfstütze häufig motorisch.

Zur Vermeidung einer Fehlpositionierung der Kopfstütze ist einer modernen Kopfstützenverstelleinrichtung bisweilen eine Detektoreinrichtung zugeordnet, die die Kopfposition eines Fahrzeuginsassen bezüglich der zugehörigen Kopfstütze erfasst. So ist beispielsweise einer aus EP 1 857 318 A2 bekannten Kopfstützenverstelleinrichtung eine Detektoreinrichtung in Form eines in die Kopfstütze integrierten kapazitiven Näherungssensors zugeordnet. Dieser Näherungssensor umfasst drei Elektroden, die in vertikaler Richtung zueinander beabstandet an der Vorderseite der Kopfstütze angeordnet sind. Die beiden äußeren Elektroden dienen hierbei als SendeElektroden zur Ausstrahlung eines elektrischen Wechseifeldes in einen vor der Kopfstütze angeordneten Raumbereich. Die mittlere Elektrode dient als gemeinsame Empfangselektrode zur Messung der zwischen jeder der SendeElektroden und der Empfangselektrode gebildeten Kapazität. Die bekannte Verstelleinrichtung nutzt den physikalischen Effekt, dass sich die Kapazität der Elektrodenanordnung durch die Anwesenheit des Kopfes im elektrischen Wechsetfeld in charakteristischer Weise ändert. Die Abweichung der Kopfstützenposition von einer vorgegebenen vertikalen Sollposition bezüglich des Kopfes des Fahrzeuginsassen wird durch Vergleich der den beiden Sendeelektroden jeweils zugeordneten Kapazitätswerte bestimmt. Als Sollposition für die Kopfstütze wird hierbei diejenige Kopfstützenposition erkannt, bei der diese Kapazitätswerte identisch sind.

Ähnliche Kopfstützenverstelleinrichtungen mit einem jeweils drei Elektroden umfassenden kapazitiven Näherungsensor zur Detektion der Kopfposition sind auch aus FR 2 884 775 A1 und DE 199 16 804 C1 bekannt.

Eine Kopfstützenverstelleinrichtung mit einem in die Kopfstütze integrierten kapazitiven Näherungssensor, der sogar fünf übereinander angeordnete Elektroden aufweist, ist aus WO 2008/133 291 A1 bekannt.

Eine sowohl vertikal als auch horizontal verfahrbare Kopfstütze mit einem darin integrierten kapazitiven Näherungssensor ist aus US 2006/0175881 A1 bekannt.

Ferner ist aus DE 185 03 203 A1 ein kapazitiver Sensor zur Überwachung einer Eigenschaft, insbesondere der Position eines Objekts bekannt, wobei dieser Sensor eine Sendeelektrode und sechs um diese herum angeordnete Empfangselektroden aufweist.

Der Erfindung liegt die Aufgabe zugrunde, eine demgegenüber verbesserte Kopfstützenverstelleinrichtung anzugeben.

Diese Aufgabe wird gemäß einer ersten Erfindungsvariante gelöst durch die Merkmale des Anspruchs 1. Danach umfasst die Kopfstützenverstelleinrichtung einen in die Kopfstütze integrierten bzw. zur Integration in die Kopfstütze vorgesehenen kapazitiven Näherungssensor, wobei dieser Näherungssensor mindestens drei mit vertikalem Abstand zueinander angeordnete Sendeelektroden und eine gemeinsame Empfangselektrode aufweist. Der Begriff "vertikal" orientiert sich hierbei an der bestimmungsgemäßen Einbausituation des Näherungssensors in einem Kraftfahrzeug.

Die Verstelleinrichtung umfasst weiterhin einen Stellantrieb zur motorischen Verstellung der Kopfstütze in vertikaler Richtung bezüglich des Fahrzeugsitzes sowie eine Steuereinheit zur Ansteuerung des Stellantriebes nach Maßgabe einer von dem Näherungssensor erfassten Kopfposition eines den Fahrzeugsitz benutzenden Fahrzeuginsassen. Die Steuereinheit ist hierbei - schaltungs- und/oder programmtechnisch - zur Durchführung eines Steuerverfahrens eingerichtet, bei welchem die Sendeelektroden zur Aussendung eines elektrischen Wechselfeldes angesteuert werden, bei welchem aus von der Empfangselektrode erfassten elektrischen Empfangssignalen jeweils zugeordnete Kapazitätsmessgrößen bestimmt werden, die eine Information über die zwischen jeder der Sendeelektroden und der Empfangselektrode jeweils gebildeten Kapazität enthalten, und bei welchem nach Maßgabe dieser Kapazitätsmessgrößen der Stellantrieb zur Einstellung einer vertikalen Sollposition der Kopfstütze relativ zu der Kopfposition angesteuert wird.

Gemäß einer zweiten Erfindungsvariante wird die obige Aufgabe unabhängig gelöst durch die Merkmale des Anspruchs 3. Die danach angegebene Kopfstützenverstelleinrichtung entspricht im Wesentlichen der vorstehend beschriebenen Erfindungsvariante. Anstelle der mindestens drei Sendeelektroden umfasst der Näherungssensor gemäß der zweiten Erfindungsvariante aber mindestens drei mit vertikalem Abstand zueinander angeordnete Empfangselektroden. Anstelle der gemeinsamen Empfangselektrode ist gemäß der zweiten Erfindungsvariante eine gemeinsame Sendeelektrode vorgesehen.

Hinsichtlich der zugrundeliegenden physikalischen Prinzipien und der erfindungsgemäß bezweckten Wirkung sind beide vorstehend beschriebenen Erfindungsvarianten im Wesentlichen äquivalent. Insbesondere hat die Vertauschung von Sende- und Empfangselektroden - von einer Vorzeichenänderung abgesehen - keinen Einfluss auf die Charakteristik des sich aufgrund des Näherungssensors im Raumbereich vor der Kopfstütze ausbreitenden elektrischen Wechselfeldes.

Durch die erfindungsgemäße Elektrodenanordnung des Näherungssensors werden systembedingte Fehleinstellungen der Kopfstütze, die bei den bekannten Verstelleinrichtungen nicht ausgeschlossen werden können, sicher vermieden. Während nämlich mit einem lediglich drei Elektroden umfassenden Näherungssensor durch Vergleich der zwischen diesen Elektroden gebildeten Kapazitäten lediglich Körperbereiche des Fahrzeuginsassen erkannt werden, deren Abstand zu der Sensoranordnung extremal (d.h. minimal oder maximal) ist, kann mit der erfindungsgemäßen Elektrodenanordnung zusätzlich erfasst werden, ob der dem Sensor gegenüberliegende Körperbereich des Fahrzeuginsassen konvex oder konkav gekrümmt ist. Dies wiederum ermöglicht eine eindeutige Unterscheidung der gewünschten Sollposition, bei der das Zentrum der Kopfstütze etwa auf Höhe des (konvex gekrümmten) Kopfes des Fahrzeuginsassen eingestellt ist, von einer unerwünschten Kopfstützenposition, bei der die Kopfstütze etwa auf gleiche Höhe mit dem (konkav geformten) Nacken des Fahrzeuginsassen eingestellt ist.

Gemäß einer bevorzugten Ausgestaltung der Erfindung werden - im Falle der ersten Erfindungsvariante - die mindestens drei Sendeelektroden zeitlich sequentiell, d.h. nach einem Zeitmultiplexverfahren, angesteuert. Das von der gemeinsamen Empfangselektrode empfangene Gesamt-Empfangssignal zerfällt somit in zeitlich wohlgetrennte Einzel-Empfangssignale, die jeweils einer bestimmten Sendeelektrode zugeordnet sind. Aus jedem dieser Einzel-Empfangssignale kann besonders einfach die zwischen der Empfangselektrode und der zugeordneten Sendeelektrode gebildete Kapazität berechnet werden. Im Falle der zweiten Erfindungsvariante wird die dort einzige Sendeelektrode zweckmäßigerweise kontinuierlich oder periodisch gepulst zur Ausstrahlung des Wechselfelds angesteuert. In diesem Fall wird der Steuereinheit von jeder der mindestens drei Empfangselektroden ein separates Empfangssignal zugeführt, aus dem sich wiederum die zwischen der zugeordneten Empfangselektrode und der gemeinsamen Sendeelektrode gebildete Kapazität berechnen lässt. Die Empfangselektroden werden vorzugsweise jeweils zeitgleich ausgelesen. Zur Vereinfachung der in der Steuereinheit implementierten Ausleseschaltung können die Empfangselektroden aber auch zeitlich sequentiell ausgelesen werden.

Weitere Fortentwicklungen werden im Folgenden aus Vereinfachungsgründen lediglich für die erste Erfindungsvariante näher erläutert. Jede dieser Ausgestaltungen ist aber im Rahmen der Erfindung entsprechend auch auf die zweite Erfindungsvariante anwendbar, wobei auch die nachfolgend beschriebenen Vorteile verwirklicht werden. In Anwendung auf die zweite Erfindungsvariante sind die Begriffe "Sendeelektrode" und "Empfangselektrode" im nachfolgenden Text sinngemäß zu vertauschen.

Um eine numerisch besonders einfache Auswertung der Empfangssignale zu ermöglichen, sind die Elektroden des erfindungsgemäßen Näherungssensors vorzugsweise derart räumlich zueinander angeordnet, dass alle Sendeelektroden zu der gemeinsamen Empfangselektrode den gleichen Abstand haben. Dies wird in besonders zweckmäßiger Lösung dadurch erreicht, dass die gemeinsame Empfangselektrode durch ein in vertikaler Richtung langgestrecktes Elektrodenfeld gebildet ist, das sich zumindest im Wesentlichen über den von allen Sendeelektroden eingenommenen vertikalen Bereich der Kopfstützenoberfläche erstreckt. Optional kann die gemeinsame Empfangselektrode aber auch mehrere solcher Elektrodenfelder umfassen, die miteinander kurzgeschlossen sind.

Das oder jedes Elektrodenfeld der gemeinsamen Empfangselektrode kann hierbei die mindestens drei Sendeelektroden außenseitig flankieren. Zur Erzielung einer besonders großen Sensorreichweite hat sich aber eine alternative Sensoranordnung als besonders vorteilhaft erwiesen, bei der jede der mindestens drei Sendeelektroden in zwei auf gleicher vertikaler Höhe positionierte und horizontal voneinander beabstandete Elektrodenfelder gegliedert ist, zwischen denen die gemeinsame Empfangselektrode - insbesondere etwa mittig - verläuft. Diese Sensoranordnung wird - unabhängig von den übrigen Merkmalen der Kopfstützenverstelleinrichtung - als eigenständige Erfindung betrachtet.

Um anhand der Empfangssignale auf besonders einfache und präzise Weise die Sollposition der Kopfstütze ermitteln zu können, sind zweckmäßigerweise zumindest zwei der Sendeelektroden in Vertikalrichtung symmetrisch bezüglich des Zentrums der Kopfstütze, d.h über bzw. unter der Kopfstütze, angeordnet. Im Rahmen des in der Steuereinheit implementierten Steuerverfahrens werden die diesen Sendeelektroden zugeordneten Kapazitätsmessgrößen sowie mindestens eine weitere Kapazitätsmessgröße vergleichend ausgewertet, um das Erreichen der vertikalen Sollposition zu erkennen.

Durch Vergleich der Kapazitätsmessgrößen der beiden symmetrisch angeordneten Sendeelektroden wird hierbei erfindungsgemäß durch die Steuereinheit eine Kopfstützenposition mit extremalem, d.h. minimalem oder maximalem Abstand des Zentrums zum Fahrzeuginsassen daran erkannt, dass sich die Werte dieser beiden Kapazitätsmessgrößen bei Erreichen dieser Kopfstützenposition kreuzen, d.h. den gleichen Wert annehmen. Ob der bei dieser Kopfstützenposition gebildete Abstand zwischen dem Fahrzeuginsassen und dem Zentrum der Kopfstütze minimal oder maximal ist, ob also der dem Näherungssensor gegenüberliegende Körperbereich konvex oder konkav ist, wird zweckmäßigerweise an dem Betrag der dritten Kapazitätsmessgröße im Vergleich zu dem Betrag der sich kreuzenden Kapazitätsmessgrößen erkannt. Die Kopfstützenposition wird dabei nur dann als Sollposition akzeptiert, wenn diese Auswertung ergibt, dass der Abstand zwischen dem Fahrzeuginsassen und dem Zentrum der Kopfstütze bei dieser Kopfstützenposition minimal ist.

Um die Sollposition der Kopfstütze schnell, aber präzise anzufahren, ohne dass die Kopfstütze in nennenswertem Umfang über die Sollposition hinausschießt, wird die Verstellgeschwindigkeit des Stellantriebs im Rahmen des in der Steuereinheit implementierten Steuerverfahrens anhand der Kapazitätsmessgrößen vorzugsweise bereits vor Erreichen der Sollposition kontinuierlich oder in mehreren Stufen herabgesetzt.

Bei einer ersten Ausführung dieser Verfahrensvariante umfasst der zugehörige Näherungssensor mehr als drei, insbesondere fünf, mit vertikalem Abstand zueinander angeordnete Sendeelektroden. Durch die Steuereinheit wird hierbei die Verfahrgeschwindigkeit des Stellantriebs dann um einen vorgegebenen Betrag herabgesetzt, wenn sich die Kapazitätsmessgrößen zweier benachbarter Sendelektroden betragsmäßig kreuzen.

Alternativ oder zusätzlich hierzu ist optional vorgesehen, dass im Zuge des Steuerverfahrens durch die Steuereinheit die Verfahrgeschwindigkeit des Stellantriebs herabgesetzt wird, wenn die Kapazitätsmessgröße einer der mindestens drei Sendeelektroden einen Extremwert, d.h. ein Minimum oder Maximum, überschreitet.

In bevorzugter Ausgestaltung des in der Steuereinheit implementierten Steuerverfahrens wird durch die Steuereinheit zunächst geprüft, ob sich innerhalb der Erfassungsreichweite des Näherungssensors überhaupt der Kopf eines Fahrzeuginsassen befindet. Beispielsweise führt die Steuereinheit hierzu einen so genannten Suchlauf durch, bei dem unter vertikaler Verfahrung der Kopfstütze kontinuierlich oder periodisch wiederholt mindestens eine Kapazitätsmessgröße, bevorzugt alle Kapazitätsmessgrößen, mit einem hinterlegten Schwellwert verglichen werden, der die Präsenz des Fahrzeuginsassen im Erfassungsfeld des Näherungssensors anzeigt. Alternativ hierzu kann auch die Veränderung einer oder mehrerer Kapazitätsmessgrößen über den Verstellweg der Kopfstütze erfasst, und aus dieser Veränderung auf die Anwesenheit oder Abwesenheit eines Fahrzeuginsassen im Erfassungsfeld des Näherungssensors geschlossen werden. Verfahrensgemäß stellt die Steuereinheit hierbei immer dann, wenn im gesamten Stellbereich der Kopfstütze keine Kopfposition ermittelt werden kann, die Kopfstütze auf eine hinterlegte Standard-Sollposition ein. Bei dieser Standard-Sollposition handelt es sich insbesondere um eine so genannte 2/3-Position, bei der die Kopfstütze zu etwa zwei Drittel ihres vertikalen Verstellwegs nach oben ausgefahren ist. Diese 2/3-Position hat sich als die für den durchschnittlichen Fahrzeuginsassen optimale Einstellung der Kopfstütze herausgestellt. In der 2/3-Position wird daher auch ohne insassenspezifische Einstellung der Kopfstützenhöhe für die meisten Fahrzeuginsassen eine zumindest akzeptable Schutzwirkung erzielt. Die Einstellung der 2/3-Position im Falle einer fehlschlagenden Detektion einer Kopfposition nach diesem Absatz wird grundsätzlich auch ohne die übrigen Merkmale der Verstelleinrichtung als unabhängige Erfindung angesehen.

Bei der Kopfstütze handelt es sich vorzugsweise um eine Vier-Wege-Kopfstütze, die sowohl in vertikaler Richtung als auch in horizontaler Richtung, also nach oben, unten, vorne und hinten verstellbar ist. Die Begriffe "vertikal" und "horizontal" sind hierbei als annähernde Angaben zu der Verstellrichtung der Kopfstütze aufzufassen. Insbesondere ist die vertikale Verstellrichtung der Kopfstütze etwa parallel zur Ausrichtung der Lehne des Fahrzeugsitzes angeordnet, und kann daher auch zur Vertikalen des umgebenden Raumes geringfügig geneigt sein. Die horizontale Verstellrichtung der Kopfstütze ist insbesondere etwa senkrecht zu der vertikalen Verstellrichtung angeordnet, und kann daher ebenfalls gegenüber der Horizontalrichtung des umgebenden Raumes geringfügig verkippt sein. Auch kann zwischen der horizontalen Verstellrichtung und der vertikalen Verstellrichtung ein von 90° geringfügig abweichender Winkel gebildet sein. Der horizontale Stellfreiheitsgrad der Kopfstütze kann auch durch eine Verkippung der Kopfstütze um eine horizontale Achse gebildet sein.

Zur Ansteuerung der Vier-Wege-Kopfstütze umfasst die Verstelleinrichtung vorzugsweise einen weiteren Stellantrieb, mit welchem die Kopfstütze, d.h. zumindest eine dem Fahrzeuginsassen bestimmungsgemäß zugewandte Frontfläche der Kopfstütze, horizontal verstellbar ist. Im Rahmen des in der Steuereinheit implementierten Steuerverfahrens wird hierbei vorzugsweise nach der Einstellung der vertikalen Sollposition der Kopfstütze der weitere Stellantrieb zur Einstellung einer horizontalen Sollposition der Kopfstütze angesteuert. Diese horizontale Sollposition wird hierbei durch Vergleich mindestens einer Kapazitätsmessgröße mit einem hinterlegten Schwellwert ermittelt. Hierzu wird durch die Steuereinheit insbesondere eine Kapazitätsmessgröße herangezogen, die einer mittleren, insbesondere etwa im Zentrum der Kopfstütze angeordneten Sende- bzw. Empfangselektrode zugeordnet ist.

Erkanntermaßen zeigen die Kapazitätsmessgrößen des kapazitiven Näherungssensors auch systembedingt, d.h. ohne Anwesenheit eines Fahrzeuginsassen, eine gewisse Abhängigkeit von der horizontalen Kopfstützenposition. Grund für diese systembedingte Abhängigkeit sind insbesondere Metallbestandteile der Kopfstütze. Solche Metallbestandteile bilden mit den Elektroden des Näherungssensors Störkapazitäten, deren Größe sich bei der horizontalen Verfahrung der Kopfstütze aufgrund des sich ändernden Abstands zu den Elektroden des Näherungssensors ändert.

Zur Eliminierung oder zumindest Verringerung dieser Störgrößen kann im Rahmen des erfindungsgemäßen Näherungssensors - wie an sich bereits aus EP 1 957 318 A2 bekannt - eine metallische, insbesondere geerdete Abschirmung hinter den Elektroden des Näherungssensors vorgesehen sein. Versuche haben aber ergeben, dass eine solche Abschirmung nachteiligerweise die Erfassungsreichweite des Näherungssensors einschränkt.

Vorzugsweise wird daher die systembedingte Abhängigkeit der bzw. jeder zur Einstellung der horizontalen Sollposition herangezogenen Kapazitätsmessgröße numerisch kompensiert. Dazu wird die genannte Kapazitätsmessgröße durch die Steuereinheit insbesondere auf eine hinterlegte Systemkennlinie normiert, die den systembedingten, also von einem Fahrzeuginsassen unbeeinflussten Verlauf der Kapazitätsmessgröße in Abhängigkeit der horizontalen Kopfstützenposition wiedergibt.

Zur schnellen, aber präzisen Anfahrung der horizontalen Sollposition wird in zweckmäßiger Ausgestaltung des Steuerverfahrens durch die Steuereinheit auch die Stellgeschwindigkeit des weiteren Stellantriebs bei Annäherung an die horizontale Sollposition kontinuierlich oder in mehreren Stufen herabgesetzt. Die Steuereinheit steuert die Stellgeschwindigkeit hierbei insbesondere anhand eines Vergleichs der Kapazitätsmessgröße mit mehreren gestaffelten Schwellwerten, wobei die Stellgeschwindigkeit des weiteren Stellantriebs immer dann diskontinuierlich in mehreren Stufen herabgesetzt wird, wenn die Kapazitätsmessgröße einen dieser Schwellwerte überschreitet.

Alle vorstehend beschriebenen Verfahrensaspekte der Erfindung werden auch für sich, insbesondere unabhängig von ihrer automatisierten Durchführung durch die Steuereinheit, als eigenständige Erfindung betrachtet.

Nachfolgend werden Ausführungsbeispiele der Erfindung anhand einer Zeichnung näher erläutert. Darin zeigen:
- Fig. 1: in einem grob schematischen Querschnitt den Kopf eines Fahrzeuginsassen sowie eine Kopfstütze mit einer zugehörigen Verstelleinrichtung, die einen kapazitiven Näherungssen- sor, eine Steuereinheit, einen Vertikal-Stellantrieb zur Verstellung der vertikalen Kopfstützenposition sowie einen Horizon- tal-Stellantrieb zur Verstellung der horizontalen Kopfstützenposition umfasst,
- Fig. 2: in einem schematischen Blockschaltbild eine erste Ausführungsform der Verstelleinrichtung gemäß Fig. 1,
- Fig. 3: in einem schematisch vereinfachten Blockschaltbild eine Steuereinheit der Verstelleinrichtung gemäß Fig. 2,
- Fig. 4: in zwei übereinander angeordneten Diagrammen gegen die vertikale Kopfstützenposition den Verlauf von fünf Kapazitätsmessgrößen des Näherungssensors (oberes Diagramm) sowie den Verlauf der in Abhängigkeit dieser Messgrößen von der Steuereinheit eingestellten Stellgeschwindigkeit des Vertikal-Stellantriebs (unteres Diagramm),
- Fig. 5: in schematischer Seitenansicht den Kopf des Fahrzeuginsassen und die auf Kopfhöhe positionierte Kopfstütze, sowie in einem schematischen Diagramm im Vergleich den jeweiligen Betrag der in dieser Position ermittelten Kapazitätsmessgrößen,
- Fig. 6: in Darstellung gemäß Fig. 5 den Kopf und die hier auf Nackenhöhe positionierte Kopfstütze sowie wiederum im Vergleich den jeweiligen Betrag der in dieser Position ermittelten Kapazitätsmessgrößen,

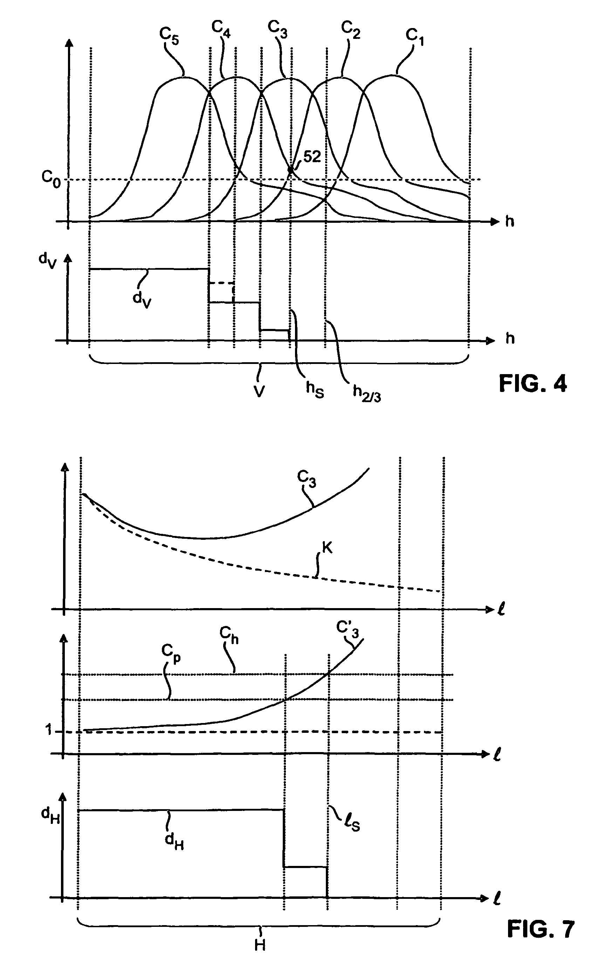

- Fig. 7: in drei übereinander angeordneten Diagrammen gegen die horizontale Kopfstützenposition den Verlauf einer Kapazitätsmessgröße in Anwesenheit eines Kopfes sowie entsprechend hierzu eine (System-)Kennlinie der systembedingten Abhängigkeit der Kapazitätsmessgröße von der horizontalen Kopfstützenposition (oberes Diagramm), den Verlauf derselben Kapazitätsmessgröße in Anwesenheit des Kopfes, normiert auf die Systemkennlinie (mittleres Diagramm), sowie den Verlauf der in Abhängigkeit dieser normierten Kapazitätsmessgröße eingestellten Stellgeschwindigkeit des Horizontal-Stellantriebs (unteres Diagramm),
- Fig. 8: in Darstellung gemäß Fig. 2 eine zweite Ausführungsform der Verstelleinrichtung,
- Fig. 9: in Darstellung gemäß Fig. 3 die Steuereinheit der Verstellein- richtung gemäß Fig. 8,
- Fig. 10 bis 12: verschiedene weitere Ausführungen des Näherungssensors.

Einander entsprechende Teile und Größen sind in allen Figuren stets mit gleichen Bezugszeichen versehen.

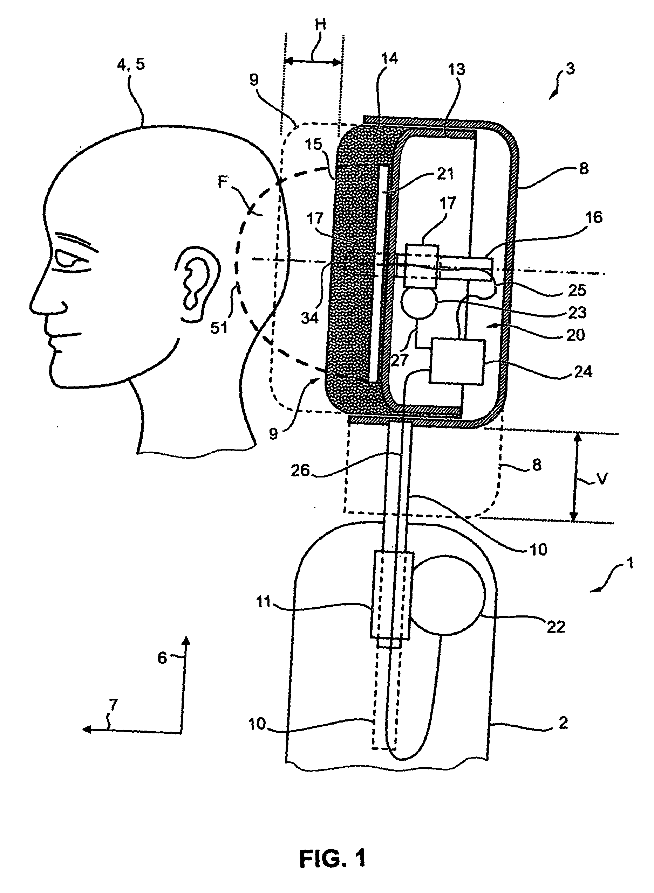

Fig. 1 zeigt in schematisch vereinfachter Darstellung einen (Fahrzeug-)Sitz 1, von dem ausschnitthaft lediglich der obere Teil einer Sitzlehne 2 dargestellt ist. Fig. 1 zeigt weiterhin eine auf der Sitzlehne 2 montierte Kopfstütze 3 für den Kopf 4 eines den Sitz 1 benutzenden Fahrzeuginsassen 5. Bei dem Sitz 1 handelt es sich insbesondere um den Fahrersitz oder Beifahrersitz eines Personenkraftwagens.

Die Kopfstütze 3 ist eine sogenannte 4-Wege-Kopfstütze, die gegenüber dem Sitz 1 sowohl in einer Vertikalrichtung 6 als auch in einer Horizontalrichtung 7 verstellbar ist. Die Begriffe "vertikal" und "horizontal" sind hierbei als "grobkörnige" Angaben zur ungefähren Spezifizierung der Verstellrichtungen aufzufassen. Insbesondere ist die Vertikalrichtung 6 etwa parallel zu der Längserstreckung der Sitzlehne 2 ausgerichtet, und mit dieser gegenüber der Raumvertikalen leicht geneigt. Die Horizontalrichtung 7 ist hierzu etwa rechtwinklig angeordnet und verläuft im Einbauzustand der Kopfstütze 3 etwa parallel zur Längsrichtung des Fahrzeugs. Die Vertikalrichtung 6 wird im Folgenden als nach oben gerichtet, die Horizontalrichtung 7 als nach vorne gerichtet angenommen, wobei sich die Begriffe "oben", "unten", "vorne" und "hinten" auf die bestimmungsgemäße Einbausituation der Kopfstütze 3 in dem Kraftfahrzeug beziehen. Als Vorder- oder Frontseite ist entsprechend diejenige Seite der Kopfstütze 3 bezeichnet, die dem Kopf 4 des Fahrzeuginsassen 5 zugewandt ist.

Die Kopfstütze 3 umfasst ein etwa schalenförmiges Rückenteil 8 aus Metall und/oder einem tragfesten Kunststoff sowie ein darin gehaltendes Vorderteil 9. An dem Rückenteil 8 sind zwei in Vertikalrichtung 6 verlaufende Tragstangen 10 angebracht, mit denen die Kopfstütze 3 in üblicher Weise an der Sitzlehne 2 verankert ist. Über die Tragstangen 10 ist die Kopfstütze 3 in Vertikalrichtung 6 verschiebbar in einer Kopfstützenhalterung 11 der Sitzlehne 2 geführt.

Das Vorderteil 9 der Kopfstütze 3 umfasst eine Trägerschale 13, die insbesondere durch ein tragfestes Kunststoffteil gebildet ist. Die Trägerschale 13 trägt an ihrer Vorderseite eine Aufpolsterung 14. Auf die Aufpolsterung 14 ist wiederum ein Überzug 15 aus textilem Material, Leder oder dgl. aufgebracht, der zur Vorderseite der Kopfstütze 3 hin die Außenhaut derselben bildet.

Das Vorderteil 9 der Kopfstütze 3 ist in Horizontalrichtung 7 verschiebbar an dem Rückenteil 8 geführt. Diese Führung ist z.B. unter anderem durch eine an dem Vorderteil 8 befestigte Zahnstange 16 gebildet, die in einer Halterung 17 des Rückenteils 8 läuft.

Fig. 1 zeigt die Kopfstütze 3 am oberen Rand ihres vertikalen Verstellweges V sowie am hinteren Rand ihres horizontalen Verstellweges H. Die entgegengesetzten Positionen des Rückenteils 8 am unteren Rand des vertikalen Verstellweges V sowie des Vorderteils 9 am vorderen Rand des horizontalen Verstellweges H sind in Fig. 1 gestrichelt angedeutet. Innerhalb des vertikalen Verstellweges V und des horizontalen Verstellweges H ist die Kopfstützenposition kontinuierlich verstellbar.

Zur Verstellung der Kopfstütze 3 ist dieser eine Verstelleinrichtung 20 zugeordnet. Diese umfasst einen kapazitiven Näherungssensor 21, einen (Vertikal-)Stellantrieb 22 zur vertikalen Verstellung der Kopfstütze 3, einen (Horizontal-)Stellantrieb 23 zur horizontalen Verstellung der Kopfstütze 3 sowie eine Steuereinheit 24.

Der Näherungssensor 21 ist innerhalb der Kopfstütze 3 zwischen der Trägerschale 13 und der Aufpolsterung 14 angeordnet. Er kann alternativ aber auch zwischen der Aufpolsterung 14 und dem Überzug 15, und somit unmittelbar unter der Frontfläche der Kopfstütze 3, angeordnet sein.

Der Stellantrieb 22 ist innerhalb der Sitzlehne 2 angeordnet und wirkt in an sich bekannter Weise auf die Tragstangen 10 der Kopfstütze 3. Der Stellantrieb 23 ist im Inneren der Kopfstütze 3 angeordnet und wirkt zur Verstellung des Vorderteils 9 gegenüber dem Rückenteil 8 mit der Zahnstange 16 zusammen.

Die bevorzugt ebenfalls in der Kopfstütze 3 angeordnete Steuereinheit 24 ist über Datenleitungen 25, 26 und 27 mit dem Näherungssensor 21 bzw. dem Stellantrieb 22 bzw. dem Stellantrieb 23 verbunden. Die Datenleitung 26 ist hierbei durch eine der Tragstangen 10 aus der Kopfstütze 3 in die Sitzlehne 2 geführt. Durch eine der Tragstangen 10 sind zudem (nicht näher dargestellte) Versorgungsleitungen zur elektrischen Versorgung des Stellantriebs 23 und der Steuereinheit 24 geführt.

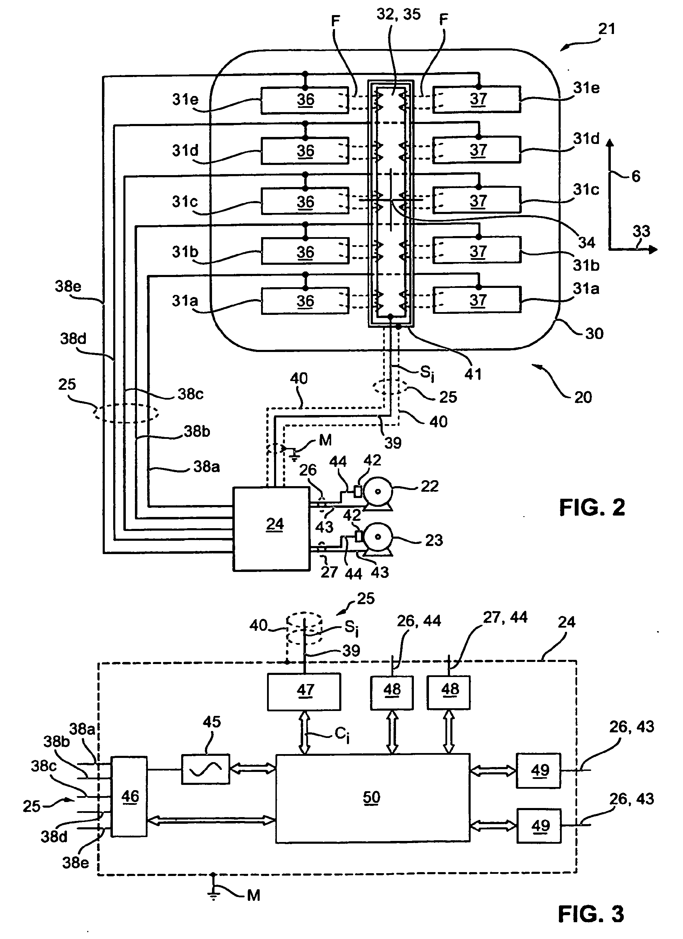

Fig. 2 zeigt eine erste Ausführungsform der Verstelleinrichtung 20 in größerem Detail. Wie dieser Darstellung in Verbindung mit Fig. 1 zu entnehmen ist, umfasst der Näherungssensor 21 einen flachen Träger 30. Auf dem Träger ist eine Elektrodenanordnung aufgebracht, die aus fünf Sendeelektroden 31 a bis 31 e sowie einer gemeinsamen Empfangselektrode 32 gebildet ist. Der Träger 30 ist aus einer vorzugsweise flexiblen Kunststofffolie gebildet. Die Elektroden 31 a bis 31 e sowie 32 sind durch vorzugsweise ebenfalls flexible Metallfolien gebildet, die auf den Träger 30 beispielsweise aufgeklebt sind. Alternativ hierzu können die Elektroden 31 a bis 31 e und 32 auch in Form einer Beschichtung auf den Träger 30 aufgebracht sein.

Der Träger 30 erstreckt sich sowohl in Vertikalrichtung 6 als auch in einer hierzu senkrechten Fahrzeugquerrichtung 33 über einen überwiegenden Flächenbereich der Kopfstütze 3. Insbesondere ist der Träger 30 etwa zentriert zu einem Zentrum 34 der Kopfstütze 3 angeordnet, auf das bestimmungsgemäß der Kopf 4 im Crash-Fall aufschlagen soll.

Die Elektroden 31 a bis 31 e sowie 32 sind wiederum über einen Großteil der Fläche des Trägers 30 verteilt angeordnet. Die Empfangselektrode 32 ist hierbei durch ein Elektrodenfeld 35 in Form eines langgestreckten Streifens gebildet, das in Fahrzeugquerrichtung 33 mittig auf dem Träger 30 angeordnet ist und sich in Vertikalrichtung 6 über den gesamten von den Sendeelektroden 31a bis 31e eingenommenen Höhenbereich erstreckt. Jede der Sendeelektroden 31 a bis 31 e ist in zwei miteinander kurzgeschlossene Elektrodenfelder 36 und 37 gegliedert, wobei sich die Elektrodenfelder 36 und 37 derselben Sendeelektrode 31 a bis 31 e jeweils auf gleicher vertikaler Höhe in Fahrzeugquerrichtung 33 links bzw. rechts der Empfangselektrode 32 erstrecken. Die Elektrodenfelder 36 und 37 der verschiedenen Sendeelektroden 31 a bis 31 e sind zueinander jeweils in Vertikalrichtung fluchtend mit Abstand übereinander gestapelt. Die Elektrodenfelder 36 und 37 der Sendeelektrode 31 a sind hierbei zuunterst, die Elektrodenfelder 36 und 37 der Sendeelektrode 31 e zuoberst angeordnet. Die Sendeelektrode 31 c ist in Vertikalrichtung etwa zentriert mit dem Zentrum 34 angeordnet. Zwischen den benachbarten Sendeelektroden 31 a und 31 b bzw. 31 b und 31 c bzw. 31 c und 31 d bzw. 31 d und 31 e ist jeweils der gleiche vertikale Abstand gebildet. Auch befinden sich alle Elektrodenfelder 36 und 37 der verschiedenen Sendeelektroden 31 a bis 31 e in stets gleichem Abstand zur Empfangselektrode 32.

Jede der Sendeelektroden 31 a bis 31 e ist im Rahmen der Datenleitung 25 über eine Einzelleitung 38a bis 38d separat mit der Steuereinheit 24 verbunden. Auch die Empfangselektrode 32 ist im Rahmen der Datenleitung 25 über eine Einzelleitung 39 mit der Steuereinheit 24 verbunden. Zur Vermeidung parasitärer Kapazitäten in der Datenleitung 25 ist die Einzelleitung 39 durch einen so genannten Guard-Schirm 40 in Form eines auf Massepotential M gelegten Leiters elektrisch abgeschirmt, der die Einzelleitung 39 - insbesondere koaxial - umgibt. Der Guard-Schirm 40 ist einerseits mit einem Masseeingang der Steuereinheit 24 kurzgeschlossen. Andererseits ist der Guard-Schirm 40 gegebenenfalls mit einer - optional vorgesehenen - Guard-Elektrode 41 verbunden, die die Empfangselektrode 32 ringförmig umgibt.

Wie Fig. 2 ebenfalls zu entnehmen ist, ist jedem der Stellantriebe 22 und 23 ein Hall-Sensor 42 zugeordnet. Die Hall-Sensoren 42 erzeugen jeweils in Zusammenwirkung mit einem (nicht dargestellten) Ringmagnet, der mit der Welle des jeweiligen Stellantriebs 22 und 23 gekoppelt ist, ein Messsignal, anhand dessen sich Zustandsgrößen des jeweiligen Stellantriebs 22 bzw. 23, wie z.B. die Drehstellung, die Drehzahl und der zurückgelegte Stellweg berechnen lassen. Jede der Datenleitungen 26 und 27 umfasst entsprechend neben einer Steuerleitung 43 zur Ansteuerung des jeweiligen Stellantriebs 22 bzw. 23 eine Messleitung 44 zur Rückführung des Hall-Signals an die Steuereinheit 24.

Die in Fig. 3 näher dargestellte Steuereinheit 24 der Verstelleinrichtung 20 gemäß Fig. 2 umfasst einen Frequenzgenerator 45, einen Zeit-Multiplexer 46, ein (Kapazitäts-)Messmodul 47, zwei Hall-Module 48 zur Ansteuerung jeweils eines der Hall-Sensoren 42 sowie zur Auswertung des zurückgelieferten Hall-Signals, sowie zwei Motorsteuerungen 49 zur Ansteuerung jeweils eines der Stellantriebe 22 und 23. Die Steuereinheit 24 umfasst weiterhin einen Mikrocontroller 50, der steuerungstechnisch mit dem Frequenzgenerator 45, dem Zeit-Multiplexer 46, dem Messmodul 47, den Hall-Modulen 48 sowie den Motorsteuerungen 49 verbunden ist.

In dem Mikrocontroller 50 ist softwaretechnisch ein (nachfolgend näher beschriebenes) Steuerprogramm implementiert, das - kurz gefasst - durch Ansteuerung des Näherungssensors 21 die Position des Kopfes 4 relativ zu der aktuellen Kopfstützenposition erfasst und die Kopfstütze 3 nach Maßgabe der erfassten Kopfposition durch Ansteuerung der Stellantriebe 22 und 23 in eine (vertikale und horizontale) Sollposition fährt.

Das in dem Mikrocontroller 50 implementierte Steuerverfahren wird beispielsweise gestartet durch das Anlassen des Kraftfahrzeugmotors. Optional ist vorgesehen, dass das Steuerverfahren auch während des Kraftfahrzeugbetriebs in regelmäßigen Abständen und/oder auf Anforderung eines Fahrzeugbenutzers (beispielsweise durch Drücken einer entsprechenden Bedientaste) gestartet werden kann.

In einer ersten Phase des Steuerverfahrens wird zunächst die vertikale Sollposition der Kopfstütze 3 eingestellt. Hierzu führt die Steuereinheit 24 zunächst einen Suchlauf durch. Zu Beginn des Suchlaufs befindet sich die Kopfstütze 3 am unteren Rand ihres vertikalen Verstellweges V sowie am hinteren Rand ihres horizontalen Verstellweges H. Andernfalls wird die Kopfstütze 3 durch die Steuereinheit 24 in diese Position gefahren.

Ausgehend von dort veranlasst der Mikrocontroller 50 unter Ansteuerung des Stellantriebs 22 über die entsprechende Motorsteuerung 49 eine Verfahrung der Kopfstütze 3 nach oben. Dabei veranlasst der Mikrocontroller 50 den Frequenzgenerator 45 zur Erzeugung einer Wechselspannung mit einer Frequenz von vorzugsweise etwa 10 Mhz, die über den Zeit-Multiplexer 46 zeitlich sequenziell auf jede der Sendeelektroden 31 a bis 31 e des Näherungssensors 21 gegeben wird.

Unter Einfluss dieser Spannung erzeugen die Sendeelektroden 31 a bis 31 e jeweils abwechselnd in einem der Kopfstütze 3 vorgelagerten Raumbereich ein elektrisches Wechselfeld F. In diesem Wechselfeld F wirkt jeder der Sendeelektroden 31 a bis 31 e mit der Empfangselektrode 32 im elektrischen Sinne als Kondensator zusammen, dessen Kapazität durch das Messmodul 47 erfasst wird.

Infolge der sequenziellen Ansteuerung der Sendeelektroden 31 a bis 31 e zerfällt das aufgrund des Wechselfeldes F in der Empfangselektrode 32 erzeugte elektrische Signal in zeitlich wohl getrennte Empfangssignale Sᵢ (i = 1,2...,5), deren jedes einer der Sendeelektroden 31 a bis 31 e zugeordnet ist. Im Folgenden werden per Definition das Empfangssignal S₁ der Sendeelektrode 31 a, das Empfangssignal S₂ der Sendelektrode 31b, das Empfangssignal S₃ der Sendeelektrode 31c, das Empfangssignal S₄ der Sendeelektrode 31 d und das Empfangssignal S₅ der Sendeelektrode 31e zugeordnet.

Aus jedem dieser Empfangssignale Sᵢ berechnet das Messmodul 47 eine zugehörigen Kapazitätsmessgröße Cᵢ (i = 1,2,....5) und gibt diese Kapazitätsmessgrößen Cᵢ fortlaufend an den Mikrocontroller 50 aus. Bei den Kapazitätsmessgrößen Cᵢ handelt es sich allgemein um beliebige Meßgrößen, aus denen sich die zwischen der zugeordneten Sendeelektrode 31 a bis 31e und der Empfangselektrode 32 gebildete Kapazität berechnen lässt. In der nachfolgend beschriebenen Variante des Steuerverfahrens handelt es sich bei den Kapazitätsmessgrößen Cᵢ insbesondere um Größen, die zu der jeweiligen Kapazität invers proportional sind. Befindet sich während des Suchlaufs der Kopf 4 des Fahrzeuginsassen 5 innerhalb einer Erfassungsreichweite 51 (in Fig. 1 gestrichelt angedeutet) des Näherungssensors 21, so beeinflusst der Kopf 4 die zwischen den Sendeelektroden 31 a bis 31 e und der Empfangselektrode 32 gebildeten Kapazitäten. Dies ist einerseits darauf zurückzuführen, dass der Kopf 4 in dem elektrischen Wechselfeld F als Dielektrikum wirkt, wodurch die jeweils betrachtete Kapazität erhöht wird. Zum anderen beruht der Einfluss des Kopfes 4 darauf, dass der Kopf 4 aufgrund der Ionenbeweglichkeit im menschlichen Körper und der stets in gewissem Umfang vorhandenen Erdung des menschlichen Körpers als Gegenelektrode wirkt, wodurch die messbaren Kapazitäten zwischen den Sendeelektroden 31 a bis 31 e und der Empfangselektrode 32 erniedrigt werden. In der Regel überwiegt der letztere Effekt. Entsprechend erhöht sich der Betrag der Kapazitätsmessgrößen Cᵢ umso mehr, je näher der Kopf an die zugeordnete Sendeelektrode 31a bis 31e angenähert wird.

Dieser Effekt wird während des Suchlaufs ausgenutzt, um zu testen, ob überhaupt eine Kopfposition erfasst werden kann. Jede der Kapazitätsmessgrößen Cᵢ wird hierzu mit einem hinterlegten Schwellwert C₀ (Fig. 4) verglichen. Sofern alle Kapazitätsmessgrößen Cᵢ über den gesamten vertikalen Verstellweg V den Schwellwert C₀ unterschreiten, so wird dies als Anzeichen hierfür interpretiert, dass sich kein Kopf 4 innerhalb der Erfassungsreichweite 51 befindet. Die Kopfstütze 3 wird in diesem Fall in Horizontalrichtung 7 vorgeschoben, worauf der Suchlauf wiederholt wird. Sofern sich über den gesamten Verstellbereich H und vertikalen Verstellbereich V keine Kopfposition ermitteln lässt, verfährt die Steuereinheit 24 die Kopfstütze 3 in die so genannte 2/3-Position, in der die Kopfstütze 3 in Vertikalrichtung 6 etwa um zwei Drittel des vertikalen Verstellwegs V nach oben hin ausgefahren ist. Ein entsprechender Wert h_{2/3} der vertikalen Kopfstützenposition h ist in Fig. 4 schematisch angetragen. In der 2/3-Position ist die Kopfstütze 3 an den hinteren Rand des horizontalen Verstellwegs H zurückgezogen.

Sofern sich andernfalls der Kopf 4 eines Fahrzeuginsassen 5 innerhalb der Erfassungsreichweite 51 befindet, durchläuft jede Kapazitätsmessgröße C₁ bis C₅ bei der vertikalen Verfahrung der Kopfstütze 3 ein charakteristisches Maximum (vgl. Fig. 4). Das Maximum der Kapazitätsmessgröße C₃ fällt hierbei mit der einzustellenden vertikalen Sollposition hₛ zusammen, nämlich derjenigen vertikalen Kopfstützenposition h, an der das Zentrum 34 der Kopfstütze in Vertikalrichtung 6 in minimalen Abstand zum Kopf 4, und dabei etwa auf gleicher Höhe mit der Auge-Ohr-Linie des Kopfes 4, angeordnet ist (s. Fig. 1).

Da erkanntermaßen infolge von Messrauschen die Bestimmung des Maximums der Kapazitätsmessgröße C₃ mit einem vergleichsweise großen Messfehler verbunden ist, wird das Erreichen der Sollposition hₛ nicht anhand der Kapazitätsmessgröße C₃, sondern präziser anhand der den Sendeelektroden 31b und 31c zugeordneten Kapazitätsmessgrößen C₂ und C₄ ermittelt. Wie Fig. 4 zu entnehmen ist, fällt nämlich die Sollposition hₛ auch etwa mit Kreuzungspunkt 52 der Kapazitätsmessgrößen C₂ und C₄ zusammen.

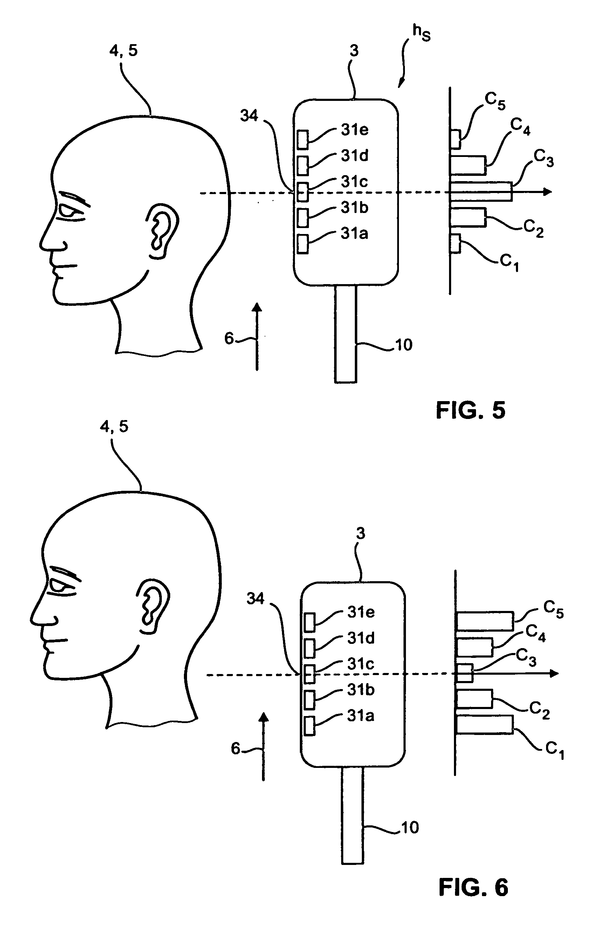

Erkanntermaßen ist die Kreuzung der Kapazitätsmessgrößen C₂ und C₄ aber lediglich ein hinreichendes, kein notwendiges Kriterium für das Erreichen der Sollposition hₛ. Vielmehr kommt es zu einer Kreuzung der Kapazitätsmessgrößen C₂ und C₄ - wie ein Vergleich der Fig. 5 und 6 zeigt - auch dann, wenn das Zentrum 34 der Kopfstütze 3 in Vertikalrichtung 6 fälschlichervveise auf den Nackenbereich des Fahrzeuginsassen 5 eingestellt ist (Fig. 6). Um zwischen der Sollposition hₛ und einer Fehleinstellung der Kopfstütze 3 auf den Nacken des Fahrzeuginsassen 5 zu unterscheiden, wird im Rahmen des im Mikrocontroller 50 implementierten Steuerverfahrens zusätzlich die Kapazitätsmessgröße C₃ ausgewertet, die der mittleren Sendeelektrode 31c zugeordnet ist. Wie ein Vergleich der Fig. 5 und 6 zeigt, ist der Wert dieser Kapazitätsmessgröße C₃ an der Sollposition hₛ größer als der Wert der Kapazitätsmessgrößen C₂ und C₄, während dies im Falle einer Fehleinstellung der Kopfstütze 3 auf den Nackenbereich des Fahrzeuginsassen 5 gerade umgekehrt ist.

In zweckmäßiger Ausgestaltung des Steuerverfahrens erkennt die Steuereinheit 24 im Sinne der vorstehenden Erläuterungen das Erreichen der Sollposition hₛ daran, dass bei Verfahrung der Kopfstütze 3 nach oben Bedingungen C₄ < C₂ und C₃ > C₄ gleichzeitig erfüllt sind. Sobald diese Bedingungen erfüllt sind, schaltet die Steuereinheit 24 entsprechend den Stellantrieb 22 ab.

Um zu verhindern, dass die Kopfstütze 3 beim Anfahren der vertikalen Sollposition hₛ diese "überschießt", setzt der Mikrocontroller 50 durch entsprechende Ansteuerung der dem Stellantrieb 22 zugeordneten Motorsteuerung 49 unter Berücksichtigung der von dem entsprechenden Hall-Modul 48 zugeführten Drehzahlwerte die Verstellgeschwindigkeit d_{V} des Stellantriebs 22 bereits vor Erreichen der Sollposition h_{S} in mehreren Stufen sukzessive herab. Wie Fig. 4 zu entnehmen ist, erfolgt eine erste Herabsetzung der Verstellgeschwindigkeit d_{V} dann, wenn die der obersten Sendeelektrode 31 e zugeordnete Kapazitätsmessgröße C₅ die der nächst niedrigeren Sendeelektrode 31 d zugeordnete Kapazitätsmessgröße C₄ kreuzt. Die Verstellgeschwindigkeit d_{V} wird ein weiteres Mal erniedrigt, wenn die Kapazitätsmessgröße C₄ die Kapazitätsmessgröße C₃ kreuzt. Um eine möglichst "weiche", d.h. rucklose Stellbewegung der Kopfstütze 3 zu realisieren, wird die Verstellgeschwindigkeit d_{V} dazwischen optional ein weiteres Mal herabgesetzt, wenn die Kapazitätsmessgröße C₄ das Maximum überschreitet (siehe gestrichelte Linie im unteren Diagramm der Fig. 4).

Nach Einstellung des vertikalen Sollwerts hₛ stellt der Mikrocontroller 50 in einer zweiten Phase des Steuerverfahrens eine horizontale Sollposition Iₛ ein. Zur Ermittlung der Sollposition I_{S} startet der Mikrocontroller 50 unter Ansteuerung des Stellantriebs 23 einen horizontalen Suchlauf, im Rahmen dessen das Vorderteil 9 der Kopfstütze 3 an den Kopf 4 herangefahren wird. Währenddessen verfolgt der Mikrocontroller 50 den im oberen Diagramm der Fig. 7 dargestellten Verlauf der Kapazitätsmessgröße C₃.

Zur numerischen Kompensation von Störkapazitäten aufgrund von metallischen Bestandteilen der Kopfstütze 3 normiert der Mikrocontroller 50 die erfasste Kapazitätsmessgröße C₃ auf eine Systemkennlinie K, die die systembedingte Abhängigkeit der Kapazitätsmessgröße C₃ von der horizontalen Kopfstützenposition wiedergibt. Die Systemkennlinie K ist in Form einer Liste von Stützstellen im Mikrocontroller 50 hinterlegt, zwischen denen der Mikrocontroller 50 interpoliert. Altemativ kann die Systemkennlinie K auch in Form einer approximierten Modellfunktion hinterlegt sein. Der Verlauf einer entsprechend normierten Kapazitätsmessgröße C'₃ = C₃ / K ist im mittleren Diagramm der Fig. 7 dargestellt.

Zur Ermittlung der horizontalen Sollposition Iₛ vergleicht der Mikrocontroller 50 die normierte Kapazitätsmessgröße C'₃ mit einem hinterlegten Schwellwert Cₕ und schaltet den Stellantrieb 23 ab, wenn dieser Schwellwen Cₕ überschritten wird (siehe unteres Diagramm in Fig. 7).

1 Um zu verhindern, dass bei der horizontalen Einstellung die Kopfstütze 3 den Sollwert I_{S} "überschießt", setzt der Mikrocontroller 60 auch die Verstellgeschwindigkeit d_{H} des Stellantriebs 23 stufenartig herab, bevor die Sollposition I_{S} erreicht wird. Die Verstellgeschwindigkeit d_{H} wird hierbei dann herabgesetzt, wenn die normierte Kapazitätsmessgröße C'₃ einen gegenüber dem Schwellwert Cₕ erniedrigten Schwellwert Cₚ überschreitet (siehe Fig. 7).

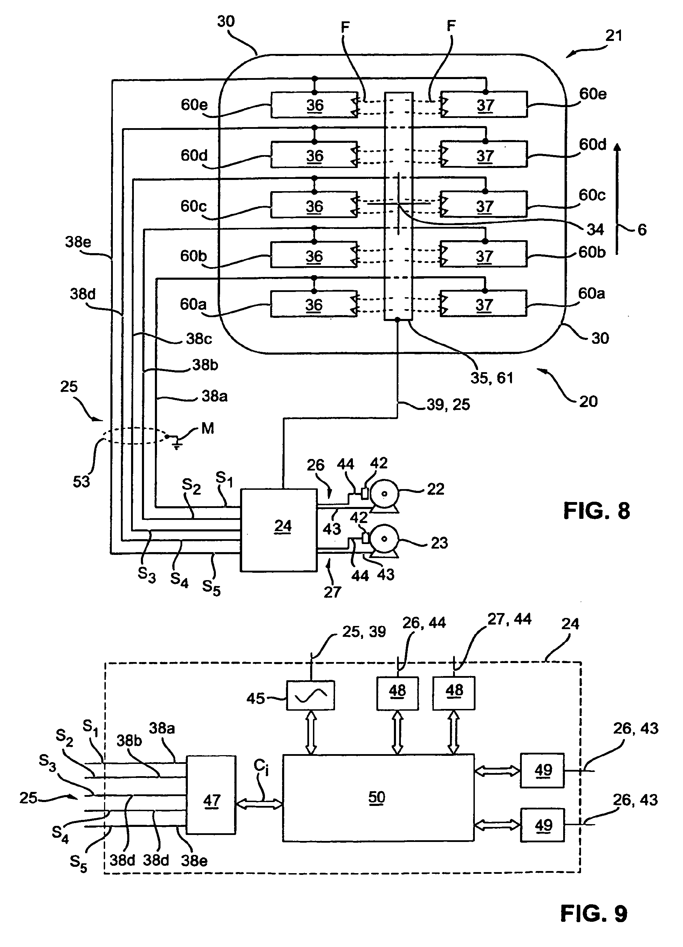

Fig. 8 zeigt eine zweite Ausführungsform der Verstelleinrichtung 20. Diese Ausführungsform gleicht - sofern nicht im Folgenden abweichend beschrieben - der im Zusammenhang mit Fig. 2 beschriebenen Ausführungsform der Verstelleinrichtung 20. Anstelle der dortigen Sendeelektroden 31 a bis 31 e sind gemäß Fig. 8 aber - bei gleicher geometrischer Anordnung der Elektrodenfelder 36 und 37 auf dem Träger 30 -fünf Empfangselektroden 60a bis 60e vorgesehen. Anstelle der Empfangselektrode 32 der Ausführungsform gemäß Fig. 2 ist gemäß Fig. 8 - bei gleicher geometrischer Anordnung des zugehörigen Elektrodenfelds 35 - eine gemeinsame Sendeelektrode 61 vorgesehen. Eine Abschirmung der Einzelleitung 39 ist hier nicht erforderlich. Ebenso kann die in Fig. 2 dargestellte Guard-Elektrode 41 entfallen. Anstelle dessen sind hier vorzugsweise die Einzelleitungen 38a bis 38e, die hier die Steuereinheit 24 mit den Empfangselektroden 60a bis 60e verbinden - insbesondere einzeln - elektrisch abgeschirmt. Eine entsprechende Abschirmung 53 ist in Fig. 8 schematisch angedeutet.

Die gegenüber Fig. 2 vertauschte Elektrodenfunktion wird durch eine modifizierte Ausführung der Steuereinheit 24 gemäß Fig. 9 bewirkt. Im Unterschied zu Fig. 3 ist hier das Kapazitätsmessmodul 47 über die Einzelleitungen 38a bis 38e mit den Empfangselektroden 60a bis 60e verschaltet. Dieses Messmodul 47 ist zur gleichzeitigen Erfassung der hier separat über die Einzelleitungen 38a bis 38e übermittelten Empfangssignale S₁ bis S₅ ausgebildet. Der Zeit-Multiplexer 46 bei der Ausführungsform gemäß Fig. 8 und 9 nicht benötigt. Der Frequenzgenerator 45 ist - ebenfalls abweichend von Fig. 3 - über die Einzelleitung 39 mit der Sendeelektrode 61 verbunden.

Abgesehen von diesen Unterschieden entspricht die Funktionsweise der Steuereinheit 24 gemäß Fig. 9 der vorstehend beschriebenen Ausführungsform. Insbesondere ist das vorstehend beschriebene Steuerverfahren in gleicher Weise auch in dem Mikrocontroller 50 gemäß Fig. 9 implementiert.

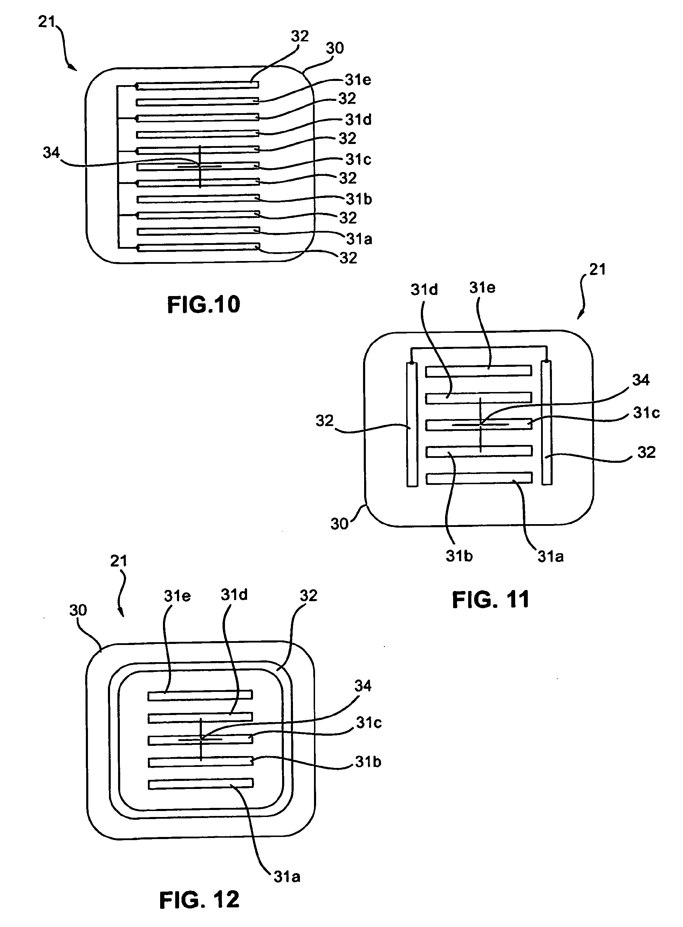

Die Fig. 10 bis 12 zeigen schließlich Varianten des Näherungssensors 21 mit gegenüber Fig. 2 abgewandelter Elektrodenkonfiguration. Bei allen hier dargestellten Varianten des Näherungssensors 21 können die Sendeelektroden 31 a bis 31 e auch als Empfangselektroden 60a bis 60e, und die gemeinsame Empfangselektrode 32 auch als gemeinsame Sendeelektrode 61, genutzt werden.

### Bezugszeichenliste

- 1: (Fahrzeug-)Sitz
- 2: Sitzlehne
- 3: Kopfstütze
- 4: Kopf
- 5: Fahrzeuginsasse
- 6: Vertikalrichtung
- 7: Horizontalrichtung
- 8: Rückenteil
- 9: Vorderteil
- 10: Tragstange
- 11: Kopfstützenhalterung
- 13: Trägerschale
- 14: Aufpolsterung
- 15: Überzug
- 16: Zahnstange
- 17: Halterung
- 20: Verstelleinrichtung
- 21: Näherungssensor
- 22: (Vertikal-)Stellantrieb
- 23: (Horizontal-)Stellantrieb
- 24: Steuereinheit
- 25: Datenleitung
- 26: Datenleitung
- 27: Datenleitung
- 30: Träger
- 31a-31e: Sendeelektroden
- 32: Empfangselektrode
- 33: Fahrzeugquerrichtung
- 34: Zentrum
- 35: Elektrodenfeld
- 36: Elektrodenfeld
- 37: Elektrodenfeld
- 38a-38e: Einzelleitung
- 39: Einzelleitung
- 40: Guard-Schirm
- 41: Guard-Elektrode
- 42: Hall-Sensor
- 43: Steuerleitung
- 44: Messleitung
- 45: Frequenzgenerator
- 46: Multiplexer
- 47: (Kapazitäts-)Messmodul
- 48: Hall-Module
- 49: Motorsteuerung
- 50: Mikrocontroller
- 51: Erfassungsreichweite
- 52: Kreuzungspunkt
- 53: Abschirmung
- 60a - 60e: Empfangselektroden
- 61: Sendeelektrode
- d_{H}: Verstellgeschwindigkeit
- dv: Verstellgeschwindigkeit
- h: (vertikale) Kopfstützenposition
- h_{2/3}: Wert
- h_{S}: Sollposition
- I: (horizontale) Kopfstützenposition
- I_{S}: Sollposition
- C₀: Schwellwert
- Cₕ: Schwellwert
- Cᵢ: Kapazitätsmessgröße (i = 1,2,...,5)
- Cₚ: Schwellwert
- F: elektrisches Wechselfeld
- H: (horizontaler) Verstellweg
- K: Systemkennlinie
- M: Massepotential
- Sᵢ: Empfangssignal (i = 1,2,...,5)
- V: (vertikaler) Verstellweg

## Patentansprüche

1. Verstelleinrichtung (20) für eine Kopfstütze (3) eines Kraftfahrzeugsitzes (1), umfassend
- einen in die Kopfstütze (3) integrierbaren oder integrierten kapazitiven Näherungssensor (21), der
o mindestens drei mit vertikalem Abstand zueinander angeordnete Sendeelektroden (31a-e) und
o eine gemeinsame Empfangselektrode (32) aufweist,
- einen Stellantrieb (22) zur vertikalen motorischen Verstellung der Kopfstütze (3) bezüglich des Fahrzeugsitzes (1), und
- eine Steuereinheit (24), die dazu eingerichtet ist,
o die Sendeelektroden (31 a-e) zur Aussendung eines elektrischen Wechselfeldes (F) anzusteuern,
o aus von der Empfangselektrode (32) erfassten elektrischen Empfangssignalen (Sᵢ) jeweils zugeordnete Kapazitätsmessgrößen (Cᵢ) zu bestimmen, die eine Information über die zwischen jeder der Sendeelektroden (31a-e) und der Empfangselektrode (32) gebildete Kapazität enthalten, und
o nach Maßgabe der Kapazitätsmessgrößen (Cᵢ) den Stellantrieb (22) zur Einstellung einer vertikalen Sollposition (hₛ) der Kopfstütze (3) relativ zu der Kopfposition eines Fahrzeuginsassen (5) anzusteuern,
o wobei zwei der mindestens drei Sendeelektroden (31a-e) symmetrisch über und unter einem Zentrum (34) der Kopfstütze (3) angeordnet sind, an dem in der vertikalen Sollposition (hₛ) der Kopf (4) des Fahrzeuginsassen (5) bestimmungsgemäß anschlagen soll, und wobei die Steuereinheit (24) dazu eingerichtet ist, das Erreichen der Sollposition (hₛ) durch Vergleich der diesen beiden Sendeelektroden (31b, 31d) zugeordneten Kapazitätsmessgrößen (C₂, C₄) daran zu erkennen, dass diese beiden Kapazitätsmessgrößen (C₂, C₄) den gleichen Wert annehmen, und
o wobei die Steuereinheit (24) dazu eingerichtet ist, durch Vergleich des Betrags mindestens einer dritten Kapazitätsmessgröße (C₃) mit dem Betrag der beiden anderen Kapazitätsmessgrößen (C₂,C₄) zu ermitteln, ob der Abstand des Näherungssensors (21) zu dem gegenüberliegenden Körperbereich des Fahrzeuginsassen (5) minimal oder maximal ist und die ermittelte vertikale Sollposition (hₛ) nur dann zu akzeptieren, wenn der Abstand minimal ist.

2. Verstelleinrichtung (20) nach Anspruch 1,
**dadurch gekennzeichnet,**
**dass** die Steuereinheit (24) dazu eingerichtet ist, die mindestens drei Sendeelektroden (31 a-e) zeitlich sequentiell anzusteuern.

3. Verstelleinrichtung (20) für eine Kopfstütze (3) eines Kraftfahrzeugsitzes (1), umfassend
- einen in die Kopfstütze (3) integrierbaren oder integrierten kapazitiven Näherungssensor (21), der
o mindestens drei mit vertikalem Abstand zueinander angeordnete Empfangselektroden (60a-e) und
o eine gemeinsame Sendeelektrode (61) aufweist,
- einen Stellantrieb (22) zur vertikalen motorischen Verstellung der Kopfstütze (3) bezüglich des Fahrzeugsitzes, und
- eine Steuereinheit (24), die dazu eingerichtet ist,
o die Sendeelektrode (61) zur Aussendung eines elektrischen Wechselfeldes (F) anzusteuern,
o aus von den Empfangselektroden (60a-e) jeweils erfassten elektrischen Empfangssignalen (Sᵢ) jeweils zugeordnete Kapazitätsmessgrößen (Cᵢ) zu bestimmen, die eine Information über die zwischen jeder der Empfangselektroden (60a-e) und der Sendeelektrode (61) gebildete Kapazität enthalten, und
o nach Maßgabe der Kapazitätsmessgrößen (Cᵢ) den Stellantrieb (22) zur Einstellung einer vertikalen Sollposition (hₛ) der Kopfstütze (3) relativ zu der Kopfposition eines Fahrzeuginsassen (5) anzusteuern,
o wobei zwei der mindestens drei Empfangselektroden (60a-e) symmetrisch über und unter einem Zentrum (34) der Kopfstütze (3) angeordnet sind, an dem in der vertikalen Sollposition (h_{S}) der Kopf (4) des Fahrzeuginsassen (5) bestimmungsgemäß anschlagen soll, und wobei die Steuereinheit (24) dazu eingerichtet ist, das Erreichen der Sollposition (hₛ) durch Vergleich der diesen beiden Empfangselektroden (60b, 60d) zugeordneten Kapazitätsmessgrößen (C₂, C₄) daran zu erkennen, dass diese beiden Kapazitätsmessgrößen (C₂, C₄) den gleichen Wert annehmen, und
○ wobei die Steuereinheit (24) dazu eingerichtet ist, durch Vergleich des Betrags mindestens einer dritten Kapazitätsgröße (C₃) mit dem Betrag der beiden anderen Kapazitätsmessgrößen (C₂,C₄) zu ermitteln, ob der Abstand des Näherungssensors (21) zu dem gegenüberliegenden Körperbereich des Fahrzeuginsassen (5) minimal oder maximal ist und die ermittelte vertikale Sollposition (hₛ) nur dann zu akzeptieren, wenn der Abstand minimal ist.

4. Verstelleinrichtung (20) nach einem der Ansprüche 1 bis 3,
**dadurch gekennzeichnet,**
**dass** alle Sendeelektroden (31a-e) zu der gemeinsamen Empfangselektrode (32) bzw. alle Empfangselektroden (60a-e) zu der gemeinsamen Sendeelektrode (61) den gleichen Abstand haben.

5. Verstelleinrichtung (20) nach Anspruch 4,
**dadurch gekennzeichnet,**
**dass** die gemeinsame Empfangselektrode (32) bzw. Sendeelektrode (61) durch mindestens ein in Vertikalrichtung (6) langgestrecktes Elektrodenfeld (35) gebildet ist, das sich im Wesentlichen über den von allen Sendeelektroden (31a-e) bzw. Empfangselektroden (60a-e) eingenommenen vertikalen Bereich der Kopfstützenoberfläche erstreckt

6. Verstelleinrichtung (20) nach Anspruch 5,
**dadurch gekennzeichnet,**
**dass** jede der mindestens drei Sendeelektroden (31 a-e) bzw. Empfangselektroden (60a-e) zwei vertikal gleich positionierte, horizontal voneinander beabstandete Elektrodenfelder (36,37) umfasst, zwischen denen die gemeinsame Empfangselektrode (32) bzw. Sendeelektrode (61) verläuft.

7. Verstelleinrichtung (20) nach einem der Ansprüche 1 bis 6,
**dadurch gekennzeichnet,**
**dass** die Steuereinheit (24) dazu eingerichtet ist, die Stellgeschwindigkeit (dᵥ) des Stellantriebs (22) bei Annäherung der Kopfstütze (3) an die Sollposition (hₛ) kontinuierlich oder in mehreren Stufen herabzusetzen.

8. Verstelleinrichtung (20) nach Anspruch 7,
**dadurch gekennzeichnet,**
**dass** der Näherungssensor (21) mehr als drei, insbesondere fünf, mit vertikalem Abstand zueinander angeordnete Sendeelektroden (31 a-e) bzw. Empfangselektroden (60a-e) umfasst, und dass die Steuereinheit (24) dazu eingerichtet ist, die Verfahrgeschwindigkeit (dᵥ) des Stellantriebs (22) abgestuft herabzusetzen, wenn sich benachbarte Sendeelektroden (31a,31b; 31b,31c) bzw. Empfangselektroden (60a,60b; 60b,60c) jeweils zugeordnete Kapazitätsmessgrößen (C₁,C₂; C₂,C₃) betragsmäßig kreuzen.

9. Verstelleinrichtung (20) nach Anspruch 7 oder 8,
**dadurch gekennzeichnet,**
**dass** die Steuereinheit (24) dazu eingerichtet ist, die Stellgeschwindigkeit (dᵥ) des Stellantriebs (22) herabzusetzen, wenn eine Kapazitätsmessgröße (C₃) einen Extremwert überschreitet.

10. Verstelleinrichtung (20) nach einem der Ansprüche 1 bis 9,
**dadurch gekennzeichnet,**
**dass** die Steuereinheit (24) dazu eingerichtet Ist, die Position der Kopfstütze (3) auf eine hinterlegte Standard-Sollposition (h_{2/3}) einzustellen, wenn im gesamten Stellbereich (V, H) der Kopfstütze (3) keine Kopfposition ermittelt werden kann.

11. Verstelleinrichtung (20) nach einem der Ansprüche 1 bis 10,
**gekennzeichnet durch**
einen weiteren Stellantrieb (23) zur horizontalen Verstellung der Kopfstütze (3), wobei die Steuereinheit (24) dazu eingerichtet ist, nach Einstellung der vertikalen Sollposition (hₛ) den weiteren Stellantrieb (23) nach Maßgabe eines Vergleichs mindestens einer Kapazitätsmessgröße (C₃) mit einem hinterlegten Schwellwert (Cₕ) zur Einstellung einer horizontalen Sollposition (Iₛ) der Kopfstütze (3) anzusteuern.

12. Verstelleinrichtung (20) nach Anspruch 11,
**dadurch gekennzeichnet,**
**dass** die Steuereinheit (24) dazu eingerichtet ist, eine systembedingte Abhängigkeit der zur Einstellung der horizontalen Sollposition (Iₛ) herangezogenen Kapazitätsmessgröße (C₃) von der horizontalen Kopfstützenposition (I) numerisch zu kompensieren.

13. Verstelleinrichtung (20) nach Anspruch 12,
**dadurch gekennzeichnet,**
**dass** die Steuereinheit (24) dazu eingerichtet ist, zur numerischen Kompensation die zur Einstellung der horizontalen Sollposition (Iₛ) herangezogene Kapazitätsmessgröße (C₃) auf eine in Abhängigkeit der horizontalen Kopfstützenposition (I) hinterlegte Systemkennlinie (K) zu normieren.

14. Verstelleinrichtung (20) nach einem der Ansprüche 11 bis 13,
**dadurch gekennzeichnet,**
**dass** die Steuereinheit (24) dazu eingerichtet ist, die Stellgeschwindigkeit (d_{H}) des weiteren Stellantriebs (23) bei Annäherung an die horizontale Sollposition (I_{S}) kontinuierlich oder in mehreren Stufen herabzusetzen.

## Claims

1. An adjusting device (20) for a headrest (3) of a motor vehicle seat (1), the adjusting device comprising
- a capacitive proximity sensor (21) integrated into or integratable into the headrest (3), the capacitive proximity sensor comprising
o at least three transmitting electrodes (31a-e) spaced apart vertically from one another, and
o a common receiving electrode (32),
- an actuating drive (22) for vertically adjusting the headrest (3) relative to the vehicle seat (1) in a motor-driven manner, and
- a control unit (24) designed
o to control the transmitting electrodes (31a-e) for emission of an alternating electric field (F),
o to determine, from received electrical signals (S₁) detected by the receiving electrode (32), respective associated measured capacitance values (C₁), which contain information regarding the capacitance produced between each of the transmitting electrodes (31a-e) and the receiving electrode, and
o to control the actuating drive (22) to set a vertical target position (hₛ) of the headrest (3) relative to the head position of a vehicle occupant (5) in accordance with the measured capacitance values (C₁),
o wherein two of the at least three transmitting electrodes (31a-e) are arranged symmetrically above and below a centre (34) of the headrest (3) on which, in the vertical target position (hₛ), the head (4) of the vehicle occupant (5) is intended to rest, and wherein the control unit (24) is designed to identify arrival at the target position (hₛ) by comparing the measured capacitance values (C₂, C₄) associated with these two transmitting electrodes (31b, 31d), these two measured capacitance values (C₂, C₄) having the same value, and
o wherein the control unit (24) is designed to establish, by comparing the magnitude of at least a third measured capacitance value (C₃) with the magnitude of the two other measured capacitance values (C₂, C₄), whether the distance between the proximity sensor (21) and the body region of the vehicle occupant (5) opposite is minimal or maximal, and the established vertical target position (hₛ) is then only to be accepted when the distance is minimal.

2. Adjusting device (20) according to claim 1, **characterised in that** the control unit (24) is designed to control the at least three transmitting electrodes (31a-e) sequentially over time.

3. An adjusting device (20) for a headrest (3) of a motor vehicle seat (1), the adjusting device comprising
- a capacitive proximity sensor (21) integrated into or integratable into the headrest (3), the capacitive proximity sensor comprising
o at least three receiving electrodes (60a-e) spaced apart vertically from one another, and
o a common transmitting electrode (61),
- an actuating drive (22) for vertically adjusting the headrest (3) relative to the vehicle seat in a motor-driven manner, and
- a control unit (24) designed
o to control the transmitting electrode (61) for emission of an alternating electric field (F),
o to determine, from received electrical signals (Si) detected by the receiving electrodes (60a-e), respective associated measured capacitance values (C₁) which contain information regarding the capacitance produced between each of the receiving electrodes (60a-e) and the transmitting electrode (61), and
o to control the actuating drive (22) to set a vertical target position (hₛ) of the headrest (3) relative to the head position of a vehicle occupant (5) in accordance with the measured capacitance values (C₁),
o wherein two of the at least three receiving electrodes (60a-e) are arranged symmetrically above and below a centre (34) of the headrest (3), on which the head (4) of the vehicle occupant (5) is intended to rest in the vertical target position (hₛ), and wherein the control unit (24) is designed to identify arrival at the target position (hₛ) by comparing the measured capacitance values (C₂, C₄) associated with these two receiving electrodes (60b, 60d), these two measured capacitance values (C₂, C₄) having the same value, and
o wherein the control unit (24) is designed to establish, by comparing the magnitude of at least a third capacitance value (C₃) with the magnitude of the two other measured capacitance values (C₂, C₄), whether the distance between the proximity sensor (21) and the body area of the vehicle occupant (5) opposite is minimal or maximal, and to then only accept the established vertical target position (hₛ) if the distance is minimal.

4. Adjusting device (20) according to any one of claims 1 to 3, **characterised in that** all transmitting electrodes (31a-e) have the same spacing from the common receiving electrode (32), and all receiving electrodes (60a-e) have the same spacing from the common transmitting electrode (61).

5. Adjusting device (20) according to claim 4, **characterised in that** the common receiving electrode (32) or the common transmitting electrode (61) is formed by at least one electrode area (35) which is elongated in a vertical direction (6) and extends substantially over the vertical region of the headrest surface occupied by all of the transmitting electrodes (31a-e) or receiving electrodes (60a-e) .

6. Adjusting device (20) according to claim 5, **characterised in that** each of the at least three transmitting electrodes (31a-e) or each of the at least three receiving electrodes (60a-e) comprises two electrode areas (36, 37) positioned at the same vertical height and spaced horizontally from one another, the common receiving electrode (32) or transmitting electrode (61) respectively extending between said electrode areas.

7. Adjusting device (20) according to any one of claims 1 to 6, **characterised in that** control unit (24) is designed to reduce a speed of actuation (dᵥ) of the actuating drive (22) continuously or in a number of steps upon approach of the headrest (3) to the target position (hₛ).

8. Adjusting device (20) according to claim 7, **characterised in that** the proximity sensor (21) comprises more than three, in particular five, transmitting electrodes (31a-e) or receiving electrodes (60a-e) spaced apart vertically from one another, and **in that** the control unit (24) is designed to reduce the speed of travel (dᵥ) of the actuating drive (22) in steps when the magnitudes of measured capacitance values (C₁, C₂; C₂, C₃) associated with adjacent transmitting electrodes (31a, 31b; 31b, 31c) or receiving electrodes (60a, 60b; 60b, 60c) cross.

9. Adjusting device (20) according to either claim 7 or claim 8, **characterised in that** the control unit (24) is designed to reduce the speed of actuation (dᵥ) of the actuating drive (22) when a measured capacitance value (C₃) exceeds a threshold value.

10. Adjusting device (20) according to any one of claims 1 to 9, **characterised in that** the control unit (24) is designed to set the position of the headrest (3) to a stored default target position (h_{2/3}) when no head position can be detected in the entire actuation range (V, H) of the headrest (3).

11. Adjusting device (20) according to any one of claims 1 to 10, **characterised by** a further actuating drive (23) for horizontal adjustment of the headrest (3), the control unit (24) being designed to control the further actuating drive (23) to set a horizontal target position (Iₛ) of the headrest (3) in accordance with a comparison of at least one measured capacitance value (C₃) with a stored threshold value (Cₕ), once the vertical target position (hₛ) has been set.

12. Adjusting device (20) according to claim 11, **characterised in that** the control unit (24) is designed to numerically compensate a system-caused dependence, on the horizontal headrest position (I), of the measured capacitance value (C₃) used to set the horizontal target position (Iₛ).

13. Adjusting device (20) according to claim 12, **characterised in that**, for numerical compensation, the control unit (24) is designed to normalise, to a stored system characteristic (K) and as a function of the horizontal headrest position (I), the measured capacitance value (C₃) used to set the horizontal target position (Iₛ).

14. Adjusting device (20) according to any one of claims 11 to 13, **characterised in that** the control unit (24) is designed to reduce the speed of actuation (d_{H}) of the further actuating drive (23) continuously or in a number of steps upon approaching the horizontal target position (Iₛ).

## Revendications

1. Dispositif de réglage (20) pour un appuie-tête (3) d'un siège de véhicule automobile (1), comprenant,
- un détecteur de proximité (21) capacitif intégré ou pouvant être intégré à l'appuie-tête (3), qui présente
° au moins trois électrodes d'émission (31a-e) agencées en présentant une distance d'espacement verticale entre elles, et
° une électrode de réception (32) commune,
- un entraînement de réglage (22) pour le réglage motorisé vertical de l'appuie-tête (3) par rapport au siège de véhicule (1), et
- une unité de commande (24) qui est conçue
° pour commander les électrodes d'émission (31a-e) en vue d'émettre un champ alternatif électrique (F) ,
° pour déterminer, à partir des signaux de réception électriques (Sᵢ) relevés par l'électrode de réception (32), des grandeurs de mesure de capacité (Cᵢ) respectivement associées, qui renferment une information concernant la capacité formée entre chacune des électrodes d'émission (31a-e) et l'électrode de réception (32), et
° pour commander l'entraînement de réglage (22), en fonction des grandeurs de mesure de capacité (Cᵢ), en vue de régler une position de consigne verticale (hₛ) de l'appuie-tête (3) par rapport à la position de la tête d'un occupant (5) du véhicule,
° deux des dites au moins trois électrodes d'émission (31a-e) étant agencées symétriquement au-dessus et en-dessous d'un centre (34) de l'appuie-tête (3) contre lequel, dans la position de consigne verticale (hₛ), doit venir s'appliquer, conformément à ce qui a été déterminé, la tête (4) de l'occupant (5) du véhicule, et l'unité de commande (24) étant conçue pour reconnaître, par comparaison des grandeurs de mesure de capacité (C₂, C₄) associées à ces deux électrodes d'émission (31b, 31d), le moment où l'on atteint la position de consigne (hₛ) par le fait que ces deux grandeurs de mesure de capacité (C₂, C₄) prennent la même valeur, et
° l'unité de commande (24) étant conçue pour déterminer, par comparaison de la valeur d'au moins une troisième grandeur de mesure de capacité (C₃) avec la valeur des deux autres grandeurs de mesure de capacité (C₂, C₄), si la distance du détecteur de proximité (21) à la zone corporelle de l'occupant (5) du véhicule, en regard, est minimale ou maximale, et pour n'accepter la position de consigne verticale (hₛ) déterminée que si la distance est minimale.

2. Dispositif de réglage (20) selon la revendication 1, **caractérisé en ce que** l'unité de commande (24) est conçue pour commander de manière séquentielle dans le temps les dites au moins trois électrodes d'émission (31a-e) .

3. Dispositif de réglage (20) pour un appuie-tête (3) d'un siège de véhicule automobile (1), comprenant,
- un détecteur de proximité (21) capacitif intégré ou pouvant être intégré à l'appuie-tête (3), qui présente
° au moins trois électrodes de réception (60a-e) agencées en présentant une distance d'espacement verticale entre elles, et
° une électrode d'émission (61) commune,
- un entraînement de réglage (22) pour le réglage motorisé vertical de l'appuie-tête (3) par rapport au siège de véhicule, et
- une unité de commande (24) qui est conçue
° pour commander l'électrode d'émission (61) en vue d'émettre un champ alternatif électrique (F),
° pour déterminer, à partir des signaux de réception électriques (Sᵢ) relevés respectivement par les électrodes de réception (60a-e), des grandeurs de mesure de capacité (Cᵢ) respectivement associées, qui renferment une information concernant la capacité formée entre chacune des électrodes de réception (60a-e) et l'électrode d'émission (61), et
° pour commander l'entraînement de réglage (22), en fonction des grandeurs de mesure de capacité (Cᵢ), en vue de régler une position de consigne verticale (hₛ) de l'appuie-tête (3) par rapport à la position de la tête d'un occupant (5) du véhicule,
° deux des dites au moins trois électrodes de réception (60a-e) étant agencées symétriquement au-dessus et en-dessous d'un centre (34) de l'appuie-tête (3) contre lequel, dans la position de consigne verticale (hₛ), doit venir s'appliquer, conformément à ce qui a été déterminé, la tête (4) de l'occupant (5) du véhicule, et l'unité de commande (24) étant conçue pour reconnaître, par comparaison des grandeurs de mesure de capacité (C₂, C₄) associées à ces deux électrodes de réception (60b, 60d), le moment où l'on atteint la position de consigne (hₛ) par le fait que ces deux grandeurs de mesure de capacité (C₂, C₄) prennent la même valeur, et
° l'unité de commande (24) étant conçue pour déterminer, par comparaison de la valeur d'au moins une troisième grandeur de mesure de capacité (C₃) avec la valeur des deux autres grandeurs de mesure de capacité (C₂, C₄), si la distance du détecteur de proximité (21) à la zone corporelle de l'occupant (5) du véhicule, en regard, est minimale ou maximale, et pour n'accepter la position de consigne verticale (hₛ) déterminée que si la distance est minimale.

4. Dispositif de réglage (20) selon l'une des revendications 1 à 3, **caractérisé en ce que** toutes les électrodes d'émission (31a-e) présentent la même distance d'espacement par rapport à l'électrode de réception (32) commune, et respectivement toutes les électrodes de réception (60a-e) par rapport à l'électrode d'émission (61) commune.

5. Dispositif de réglage (20) selon la revendication 4, **caractérisé en ce que** l'électrode de réception (32) commune, respectivement l'électrode d'émission (61) commune, est formée par au moins un champ d'électrode (35) allongé dans la direction verticale (6), qui s'étend sensiblement sur toute la zone verticale de la surface d'appuie-tête couverte par toutes les électrodes d'émission (31a-e), respectivement toutes les électrodes de réception (60a-e).

6. Dispositif de réglage (20) selon la revendication 5, **caractérisé en ce que** chacune des dites au moins trois électrodes d'émission (31a-e), respectivement électrodes de réception (60a-e), englobe deux champs d'électrode (36, 37) de même position verticale et espacés horizontalement l'un de l'autre, et entre lesquels s'étend l'électrode de réception (32) commune, respectivement l'électrode d'émission (61) commune.

7. Dispositif de réglage (20) selon l'une des revendications 1 à 6, **caractérisé en ce que** l'unité de commande (24) est conçue pour abaisser, de manière continue ou en plusieurs paliers, la vitesse de réglage (dᵥ) de l'entraînement de réglage (22) lorsque l'appuie-tête (3) se rapproche de la position de consigne (hₛ).

8. Dispositif de réglage (20) selon la revendication 7, **caractérisé en ce que** le détecteur de proximité (21) comprend plus de trois, notamment cinq électrodes d'émission (31a-e), respectivement électrodes de réception (60a-e), agencées en présentant une distance d'espacement verticale entre elles, et **en ce que** l'unité de commande (24) est conçue pour abaisser par paliers la vitesse de déplacement (dᵥ) de l'entraînement de réglage (22), lorsque des grandeurs de mesure de capacité (C₁, C₂ ; C₂, C₃) respectivement associées à des électrodes d'émission (31a, 31b ; 31b, 31c) voisines, respectivement électrodes de réception (60a, 60b ; 60b, 60c) voisines, se croisent quant à leur valeur.

9. Dispositif de réglage (20) selon la revendication 7 ou la revendication 8, **caractérisé en ce que** l'unité de commande (24) est conçue pour abaisser la vitesse de réglage (dᵥ) de l'entraînement de réglage (22) lorsqu'une grandeur de mesure de capacité (C₃) dépasse une valeur extrême.

10. Dispositif de réglage (20) selon l'une des revendications 1 à 9, **caractérisé en ce que** l'unité de commande (24) est conçue pour régler la position de l'appuie-tête (3) sur une position de consigne standard (h_{2/3}) consignée, lorsqu'il est impossible de déterminer une position de tête sur la totalité de la plage de réglage (V, H) de l'appuie-tête (3).

11. Dispositif de réglage (20) selon l'une des revendications 1 à 10, **caractérisé par** un entraînement de réglage supplémentaire (23) pour le réglage horizontal de l'appuie-tête (3), l'unité de commande (24) étant conçue pour, après réglage de la position de consigne verticale (hₛ), commander l'entraînement de réglage supplémentaire (23) en fonction d'une comparaison d'au moins une grandeur de mesure de capacité (C₃) avec une valeur de seuil (Cₕ) consignée, en vue du réglage d'une position de consigne horizontale (Iₛ) de l'appuie-tête (3).

12. Dispositif de réglage (20) selon la revendication 11, **caractérisé en ce que** l'unité de commande (24) est conçue pour compenser numériquement une relation propre au système, de la grandeur de mesure de capacité (C₃) utilisée pour le réglage de la position de consigne horizontale (Iₛ) à la position horizontale (I) de l'appuie-tête.

13. Dispositif de réglage (20) selon la revendication 12, **caractérisé en ce que** l'unité de commande (24) est conçue, en vue de la compensation numérique, pour normer la grandeur de mesure de capacité (C₃) utilisée pour le réglage de la position de consigne horizontale (Iₛ), par rapport à une courbe caractéristique (K) consignée du système, fonction de la position horizontale (I) de l'appuie-tête.

14. Dispositif de réglage (20) selon l'une des revendications 1 à 13, **caractérisé en ce que** l'unité de commande (24) est conçue pour abaisser, de manière continue ou en plusieurs paliers, la vitesse de réglage (d_{H}) de l'entraînement de réglage supplémentaire (23) lorsqu'on se rapproche de la position de consigne horizontale (ils).
